# EUROPEAN PATENT APPLICATION

(11) **EP 4 620 788 A1**
(43) Date of publication of application: **24.09.2025**
(21) Application number: 23890233.2
(22) Date of filing: 30.06.2023
(51) Int. Cl.: B62D 21/17, B62D 25/02, B60K 13/04, B60K 11/02

(54) **LOWER VEHICLE BODY STRUCTURE AND VEHICLE**

(30) Priority: 16.11.2022 CN 202211436684
(71) Applicant: BYD Company Limited, Shenzhen, Guangdong 518118 (CN)
(72) Inventor: ZHANG, Feng, Shenzhen, Guangdong 518118 (CN); LIAO, Yinsheng, Shenzhen, Guangdong 518118 (CN); ZHAO, Gaoming, Shenzhen, Guangdong 518118 (CN); SUN, Xianmeng, Shenzhen, Guangdong 518118 (CN); SHAO, Xingyang, Shenzhen, Guangdong 518118 (CN)
(74) Representative: Aldridge, Henry Alexander
(86) International application number: PCT/CN2023/105059
(87) International publication number: WO 2024/103791

(57) **Abstract**

A lower vehicle body structure and a vehicle. The lower vehicle body structure comprises a rocker beam and an exhaust pipe; a first accommodating space is formed in the rocker beam; and at least part of the exhaust pipe is accommodated in the first accommodating space.

## Description

### CROSS-REFERENCE TO RELATED APPLICATIONS

The present disclosure claims priority to Chinese Patent Application No. 202211436684.0, entitled "LOWER VEHICLE BODY STRUCTURE AND VEHICLE" filed on November 16, 2022. The entire content of the above-referenced application is incorporated herein by reference.

### FIELD

The present disclosure relates to the technical field of vehicles, and more specifically, to a lower vehicle body structure and a vehicle.

### BACKGROUND

In the related art, a floor of a vehicle body is provided with an exhaust pipe mounting piece and a battery mounting piece, the battery mounting piece is internally provided with an accommodating space for accommodating core modules, the exhaust pipe mounting piece is arranged at a side edge of the battery mounting piece and is provided with an avoidance groove, and the avoidance groove surrounds part of the exhaust pipe, thereby achieving parallel arrangement of a battery pack and an exhaust pipe in a transverse direction. In this way, a space under the floor of the vehicle body is occupied by the exhaust pipe and the battery pack, and the battery pack cannot make maximum use of the space under the floor of the vehicle body.

### SUMMARY

An objective of the present disclosure is to provide a lower vehicle body structure and a vehicle, so as to maximize a space available for a battery pack.

In order to achieve the above objective, the present disclosure provides a lower vehicle body structure. The lower vehicle body structure includes:
a rocker beam, a first accommodating space being formed in the rocker beam; and
an exhaust pipe, at least part of the exhaust pipe being accommodated in the first accommodating space.

Optionally, the rocker beam includes a first beam body and a second beam body. The first beam body is connected to the second beam body. The first beam body and the second beam body are oppositely arranged to form the first accommodating space.

Optionally, the first beam body is detachably connected to the second beam body.

Optionally, a first arc-shaped groove is formed on the first beam body. A second arc-shaped groove is formed on the second beam body. The first arc-shaped groove corresponds to the second arc-shaped groove to form the first accommodating space.

Optionally, the first beam body includes a first combination part. The second beam body includes a second combination part. An extension part is arranged on at least one of the first combination part and the second combination part, so that the first combination part and the second combination part have an overlapping region. A fastener passes through the overlapping region to connect the first combination part to the second combination part.

Optionally, the rocker beam further includes a positioning structure. The positioning structure includes a positioning protrusion and a positioning groove. One of the positioning protrusion and the positioning groove is arranged on the first beam body, and the other is arranged on the second beam body.

Optionally, the exhaust pipe includes a first pipe section, a second pipe section and a third pipe section. The second pipe section is accommodated in the first accommodating space and is configured as a U-shaped pipe section. The rocker beam is provided with two first avoidance holes. The two first avoidance holes are arranged spaced away along a length direction of the rocker beam. Two ends of the second pipe section extend out from the first avoidance holes and are respectively connected to the first pipe section and the third pipe section.

Optionally, the first beam body and the second beam body are oppositely arranged and are detachably connected. The second beam body is located on an inner side of the first beam body in a transverse direction. A side of the second beam body facing away from the first beam body in the transverse direction is provided with the first avoidance holes. The two first avoidance holes are respectively arranged close to two ends of the second beam body.

Optionally, the exhaust pipe includes a cooling jacket. The cooling jacket sleeves the second pipe section and is provided with a liquid inlet and a liquid outlet. Two ends of the cooling jacket are hermetically connected to the second pipe section. A cooling cavity is formed between the cooling jacket and the second pipe section. The liquid inlet and the liquid outlet are arranged spaced away along a length direction of the cooling jacket and are respectively communicated with the cooling cavity.

Optionally, the lower vehicle body structure includes a cooling water pipe. The cooling water pipe is arranged parallel to the rocker beam and includes a liquid inlet pipe and a liquid outlet pipe. A water inlet connector and a water outlet connector are respectively mounted on the liquid inlet and the liquid outlet. The water inlet connector and the water outlet connector are respectively connected to the liquid inlet pipe and the liquid outlet pipe.

Optionally, the exhaust pipe includes an intermediate jacket. The intermediate jacket is arranged between the second pipe section and the cooling jacket and two ends of the intermediate jacket are hermetically connected to the second pipe section. Two ends of the cooling jacket are hermetically connected to the intermediate jacket. An intermediate cavity is formed between the intermediate jacket and the second pipe section. The cooling cavity is formed between the cooling jacket and the intermediate jacket. The intermediate jacket is provided with a mounting hole. A plunger valve is mounted on the mounting hole. The second pipe section is provided with a through hole. The plunger valve opens or closes the through hole, so as to communicate the second pipe section with the intermediate cavity or separate the second pipe section from the intermediate cavity.

Optionally, the lower vehicle body structure includes a plunger valve controller. The plunger valve includes a valve body and a valve core. The valve body is fixed on the intermediate jacket. The valve core is movably arranged in the valve body and extends into the mounting hole. The plunger valve controller is connected to the valve core and is fixed on the rocker beam.

Optionally, the second pipe section includes a straight pipe section and bent sections connected to two ends of the straight pipe section. A length of the straight pipe section, a length of the intermediate jacket and a length of the cooling jacket sequentially decrease progressively.

Optionally, the exhaust pipe includes a first thermal insulation sleeve and a second thermal insulation sleeve. The first thermal insulation sleeve sleeves the straight pipe section. The second thermal insulation sleeve sleeves the bent section.

Optionally, fixed flanges are respectively arranged at ends of the two bent sections. The fixed flange sleeves the second thermal insulation sleeve and is fixedly connected to the rocker beam.

Optionally, the lower vehicle body structure includes a sub-frame longitudinal beam. The exhaust pipe includes a fourth pipe section. The sub-frame longitudinal beam is formed with a second accommodating space. The fourth pipe section is accommodated in the second accommodating space and is connected to the third pipe section.

Optionally, the fourth pipe section is sleeved with a third thermal insulation sleeve.

Optionally, the sub-frame longitudinal beam includes an upper plate and a lower plate, and the upper plate and the lower plate are fastened to each other and connected to form the second accommodating space.

Optionally, the fourth pipe section is limited in the second accommodating space through a limiting plate. The upper plate is provided with a limiting hole for the limiting plate to pass through. The limiting plate is wrapped on the fourth pipe section and is fixedly connected to the lower plate.

On the basis of the above technical solution, the present disclosure further provides a vehicle. The vehicle includes the above lower vehicle body structure.

According to the above technical solution, in the lower vehicle body structure provided in the present disclosure, the first accommodating space is formed in the rocker beam, and at least part of the exhaust pipe is accommodated in the first accommodating space. In this way, an internal space of the rocker beam can be used for arranging the exhaust pipe, and the exhaust pipe does not need to occupy an additional space, and thus can not only avoid a battery, but also sufficiently approach a connected exhaust system. A space under a floor of a vehicle body can be completely occupied by a battery pack to maximize the space available for the battery pack, thereby facilitating the overall arrangement of floor of the vehicle body.

Other features and advantages of the present disclosure will be described in detail in the following specific implementations.

### BRIEF DESCRIPTION OF THE DRAWINGS

The drawings are intended to provide further understanding of the present disclosure and constitute a part of this specification. The drawings and the specific implementations below are used together for explaining the present disclosure rather than constituting a limitation to the present disclosure. In the drawings:
FIG. 1 is a schematic structural diagram of a vehicle provided according to an exemplary embodiment of the present disclosure;
FIG. 2 is another schematic structural diagram of a vehicle provided according to an exemplary embodiment of the present disclosure, where a second pipe section of an exhaust pipe is shown accommodated in a rocker beam;
FIG. 3 is a schematic structural diagram of a rocker beam in a vehicle provided according to an exemplary embodiment of the present disclosure;
FIG. 4 is another schematic structural diagram of a rocker beam in a vehicle provided according to an exemplary embodiment of the present disclosure;
FIG. 5 is a cross-sectional diagram taken along a line A-A in FIG. 3;
FIG. 6 is a schematic structural diagram of a second pipe section of an exhaust pipe in a vehicle provided according to an exemplary embodiment of the present disclosure;
FIG. 7 is a cross-sectional schematic diagram of a second pipe section of an exhaust pipe in a vehicle provided according to an exemplary embodiment of the present disclosure;
FIG. 8 is another schematic structural diagram of a vehicle provided according to an exemplary embodiment of the present disclosure; and
FIG. 9 is a schematic structural diagram of a sub-frame longitudinal beam and a fourth pipe section of an exhaust pipe in a vehicle provided according to an exemplary embodiment of the present disclosure.

### DETAILED DESCRIPTION

Specific implementations of the present disclosure are described in detail below with reference to the drawings. It should be understood that the specific implementations described herein are merely used to describe and explain the present disclosure, but are not intended to limit the present disclosure.

In the present disclosure, without the contrary explanation, the orientation terms such as "upper and lower" usually refer to relative "upper and lower" of the corresponding component in a direction of gravity in a use state, and "inside and outside" refer to the "inside and outside" of the contour of the corresponding component. In addition, "front and rear" are defined based on a vehicle, an orientation of a vehicle head is "front", and an orientation of a vehicle tail is "rear". Furthermore, terms such as "first", "second", "third" and "fourth" used in the present disclosure are intended to distinguish an element from another element, and have no sequence or importance. In the following description, when the drawings are involved, unless otherwise explained, same reference numerals in different drawings represent same or similar elements. The above definitions are only used to explain and illustrate the present disclosure, and should not be understood as limiting the present disclosure.

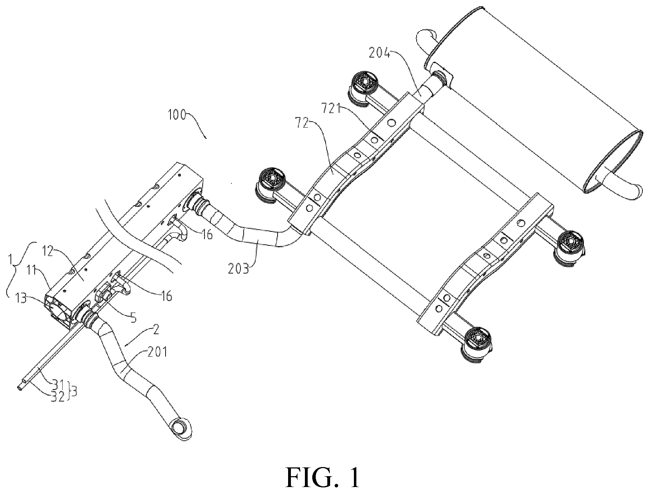

According to an exemplary implementation of the present disclosure, referring to FIG. 1 to FIG. 9, a lower vehicle body structure 100 is provided. The lower vehicle body structure 100 includes a rocker beam 1 and an exhaust pipe 2. A first accommodating space 13 is formed in the rocker beam 1. At least part of the exhaust pipe 2 is accommodated in the first accommodating space 13.

According to the above technical solution, in the lower vehicle body structure 100 provided in the present disclosure, the first accommodating space 13 is formed in the rocker beam 1, and at least part of the exhaust pipe 2 is accommodated in the first accommodating space 13. In this way, an internal space of the rocker beam 1 can be used for arranging the exhaust pipe 2, and the exhaust pipe 2 does not need to occupy an additional space, and thus can not only avoid a battery, but also sufficiently approach a connected exhaust system. A space under a floor of a vehicle body can be completely occupied by a battery pack to maximize the space available for the battery pack, thereby facilitating the overall arrangement of floor of the vehicle body.

In an exemplary implementation provided in the present disclosure, the rocker beam 1 may include a first beam body 11 and a second beam body 12, where the first beam body 11 and the second beam body 12 are oppositely arranged to form the above first accommodating space 13. In this design manner, the rocker beam 1 is designed as a split structure, that is, the rocker beam 1 is formed by connecting the first beam body 11 and the second beam body 12 to each other, so that the exhaust pipe 2 can be conveniently mounted in the rocker beam 1, thereby solving a problem of assembly between the exhaust pipe 2 and the rocker beam 1.

The first beam body 11 and the second beam body 12 may be detachably connected. In this way, when the exhaust pipe 2 needs to be replaced or disassembled, the exhaust pipe 2 may be taken out from the rocker beam 1 by disassembling the first beam body 11 and the second beam body 12, so as to facilitate the disassembly of the exhaust pipe 2.

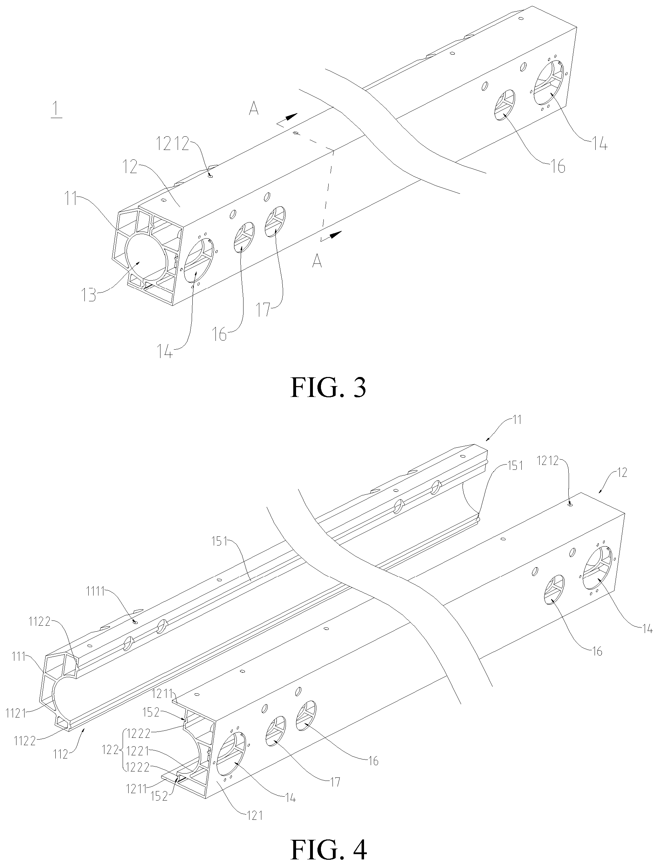

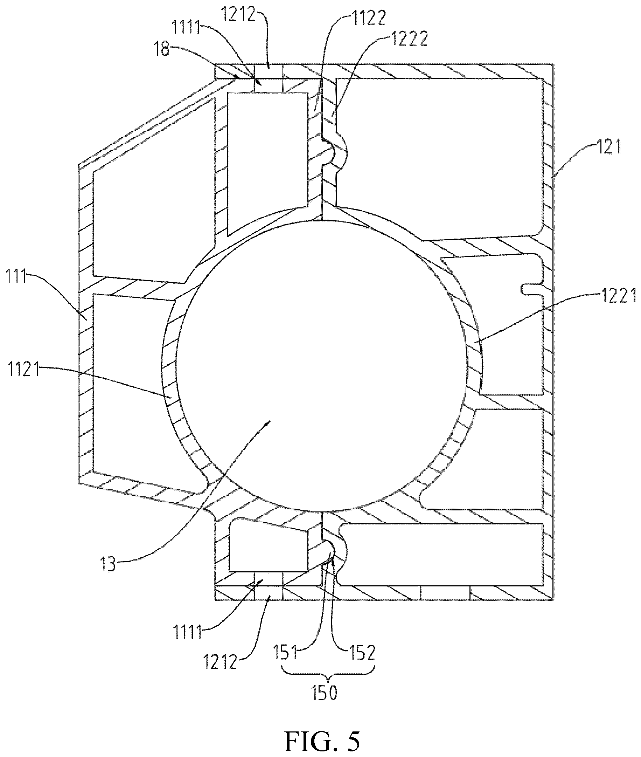

In an exemplary implementation provided in the present disclosure, the first beam body 11 and the second beam body 12 may be constructed in any suitable manner. Referring to FIG. 4 and FIG. 5, a first arc-shaped groove 1121 may be formed on the first beam body 11. A second arc-shaped groove 1221 may be formed on the second beam body 12. The first arc-shaped groove 1121 and the second arc-shaped groove 1221 are butted to form the first accommodating space 13.

To facilitate the connection between the first beam body 11 and the second beam body 12, the first beam body 11 may include a first combination part 112, the second beam body 12 may include a second combination part 122, and an extension part 1211 (the same as the extension part 1211 below) is arranged on at least one of the first combination part 112 and the second combination part 122, so that the first combination part 112 and the second combination part 122 have an overlapping region 18. A fastener passes through the overlapping region 18 to connect the first combination part 112 to the second combination part 122, thereby achieving the connection between the first beam body 11 and the second beam body 12.

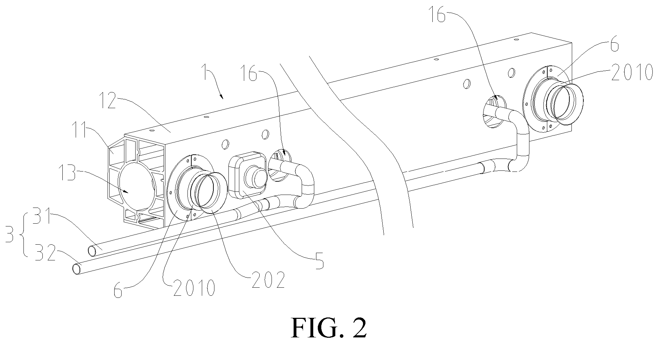

In an exemplary implementation provided in the present disclosure, with reference to FIG. 2 to FIG. 6, the exhaust pipe 2 may include a first pipe section 201, a second pipe section 202 and a third pipe section 203. The second pipe section 202 is accommodated in the first accommodating space 13 and may be configured as a U-shaped pipe section. The rocker beam may be provided with two first avoidance holes 14. The two first avoidance holes 14 are arranged spaced away along a length direction of the rocker beam. Two ends of the second pipe section 202 extend out from the first avoidance holes 14 and are respectively connected to the first pipe section 201 and the third pipe section 203. A front end of the first pipe section 201 is configured to be connected to an engine of a vehicle. A rear end of the third pipe section 203 is configured to be connected to a rear section part of the exhaust pipe 2. The exhaust gas generated by the engine is conveyed to an exhaust muffler through the first pipe section 201, the second pipe section 202, the third pipe section 203 and the rear section part of the exhaust pipe 2. After being processed by the exhaust muffler, the exhaust gas is discharged to an atmospheric environment.

In addition, the two first avoidance holes 14 may be arranged at any suitable position of the rocker beam. In an implementation, the two first avoidance holes 14 may be arranged at two ends of the rocker beam, that is, two ends of the first accommodating space 13 are communicated. In this case, the two ends of the second pipe section 202 pass through the two ends of the rocker beam. In this way, a battery pack can be avoided, and a connected exhaust system can be sufficiently approached, thereby facilitating the overall arrangement of the exhaust pipe 2. In another implementation, referring to FIG. 3 and FIG. 4, the two first avoidance holes 14 may be arranged on a side surface of the rocker beam. In this case, the two ends of the second pipe section 202 pass through the side surface of the rocker beam. By this arrangement manner, the overall arrangement of the exhaust pipe 2 may be more compact. In an embodiment, the two first avoidance holes 14 are arranged on an inner side surface of the rocker beam. In this way, the arrangement manner of the second pipe section 202 integrated in the rocker beam 1 has less influence on a side periphery of the vehicle body, and may be implemented on a conventional vehicle body structure. In addition, the orientation term "inner" in the "inner side surface" is defined by relative positions of the rocker beam 1 and the battery pack. An orientation close to the battery pack is "inner", otherwise, the orientation is "outer". A side surface close to the battery pack in the rocker beam 1 is an "inner side surface".

In an exemplary implementation provided in the present disclosure, the first beam body 11 and the second beam body 12 may be arranged in any suitable manner to form the rocker beam 1.

In an implementation, referring to FIG. 3 to FIG. 5, the first beam body 11 and the second beam body 12 may be oppositely arranged in a transverse direction and may be detachably connected. The second beam body 12 is located on an inner side of the first beam body 11 in the transverse direction, that is, the first beam body 11 is arranged away from the battery pack, the second beam body 12 is arranged close to the battery pack, and a side of the second beam body 12 facing away from the first beam body 11 in the transverse direction is provided with first avoidance holes 14. That is to say, the two first avoidance holes 14 are arranged on a side of the second beam body 12 close to the battery pack. In this way, an arrangement direction of the second pipe section 202 integrated in the rocker beam 1 has less influence on the side periphery of the vehicle body, and may be implemented on a conventional vehicle body structure. The two first avoidance holes 14 are respectively arranged close to the two ends of the second beam body 12. In this way, the battery pack can be avoided, and the connected exhaust system can be sufficiently approached, so that the overall arrangement of the exhaust pipe 2 is very compact.

The first beam body 11 and the second beam body 12 may be constructed in any suitable manner. Optionally, referring to FIG. 4 and FIG. 5, the first beam body 11 may include a first main body 111 and a first combination part 112. The first combination part 112 includes a first arc-shaped groove 1121 and two first attachment walls 1122. The two first attachment walls 1122 extend along a vertical direction and are respectively located at two ends of the first arc-shaped groove 1121. The first main body 111 is connected to the two first attachment walls 1122. The second beam body 12 may include a second main body 121 and a second combination part 122. The second combination part 122 includes a second arc-shaped groove 1221 and two second attachment walls 1222. The two second attachment walls 1222 extend along a vertical direction and are respectively located at the two ends of the second arc-shaped groove 1221. The second main body 121 is connected to the two second attachment walls 1222 and the second main body 121 includes an extension part 1211. The extension part 1211 extends along a transverse direction. The first arc-shaped groove 1121 and the second arc-shaped groove 1221 are butted to each other to form the first accommodating space 13. The first attachment wall 1122 and the second attachment wall 1222 are attached to each other. The first main body 111 is provided with a first connecting hole 1111. The extension part 1211 is provided with a second connecting hole 1212 and is overlapped to the first main body 111. A fastener passes through the first connecting hole 1111 and the second connecting hole 1212 to fixedly connect the first beam body 11 to the second beam body 12. In this way, a split design of the rocker beam 1 is achieved, the problem of assembly between the rocker beam 1 and the exhaust pipe 2 is solved, and the exhaust pipe 2 can be conveniently integrated in the rocker beam 1 to save the space under the floor of the vehicle body, so that the space under the floor of the vehicle body can be completely occupied by the battery pack to maximize the space available for the battery pack, thereby facilitating the overall arrangement of floor of the vehicle body. To improve the reliability of connection between the first beam body 11 and the second beam body 12, an upper side surface of the first main body 111 and a lower side surface of the first main body 111 may be provided with multiple first connecting holes 1111. The multiple first connecting holes 1111 are arranged spaced away along a length direction of the first main body 111. Two extension parts 1211 of the second beam body 12 are provided. The two extension parts 1211 are arranged spaced away along a vertical direction and are configured to be overlapped to the first main body 111. The two extension parts 1211 are respectively provided with multiple second connecting holes 1212. The multiple second connecting holes 1212 are arranged spaced away along a length direction of the second main body 121. Multiple fasteners pass through the corresponding first connecting holes 1111 and second connecting holes 1212 to fixedly connect the first beam body 11 to the second beam body 12. In addition, the above fastener may be any suitable fastening member such as a rivet, which is not specifically limited in the present disclosure.

In addition, to facilitate the positioning and mounting of the first beam body 11 and the second beam body 12, the rocker beam 1 may further include a positioning structure 150. The first beam body 11 and the second beam body 12 may be positioned through the positioning structure 150 to facilitate a mounting of the first beam body 11 and the second beam body 12.

The positioning structure 150 may be constructed in any suitable manner. Optionally, referring to FIG. 4 and FIG. 5, the positioning structure 150 may include a positioning protrusion 151 and a positioning groove 152. The positioning protrusion 151 and the positioning groove 152 extend along a length direction of the rocker beam 1. One of the first attachment wall 1122 and the second attachment wall 1222 is provided with the positioning protrusion 151, and the other of the first attachment wall 1122 and the second attachment wall 1222 is provided with the positioning groove 152. The positioning between the first beam body 11 and the second beam body 12 is achieved by way of mutual cooperation between the positioning protrusion 151 and the positioning groove 152, so as to facilitate the mounting of the first beam body 11 and the second beam body 12. In the embodiments shown in FIG. 4 and FIG. 5, the first attachment wall 1122 is provided with the above positioning protrusion 151, and the second attachment wall 1222 is provided with the above positioning groove 152. In other embodiments, it may be that the first attachment wall 1122 is provided with the above positioning groove 152, and the second attachment wall 1222 is provided with the above positioning protrusion 151. This is not specifically limited in the present disclosure. In addition, the positioning protrusion 151 is integrally formed on the first beam body 11, and the positioning groove 152 is integrally formed on the second beam body 12. By way of the arrangement of the positioning protrusion 151 and the positioning groove 152, a structural strength of the rocker beam 1 can be enhanced, and a collision safety performance of the whole vehicle can be improved. In some other implementations, the positioning structure 150 may include a positioning pin and a positioning hole. One of the first attachment wall 1122 and the second attachment wall 1222 is provided with the above positioning pin, and the other is provided with the above positioning hole. The positioning between the first beam body 11 and the second beam body 12 is achieved by way of cooperation between the positioning pin and the positioning hole.

In some other implementations, the first beam body 11 and the second beam body 12 may be oppositely arranged in a vertical direction, that is, the first beam body 11 and the second beam body 12 are arranged up and down. In this case, a semi-circular hole is respectively provided on a side of the first beam body 11 close to the battery pack and a side of the second beam body 12 close to the battery pack. After the first beam body 11 and the second beam body 12 are assembled with each other, the two semi-circular holes are butted with each other to form the first avoidance hole 14. The above semi-circular holes may be provided at positions close to the ends of the first beam body 11 and the second beam body 12. In this way, positions where the second pipe section 202 passes through the rocker beam 1 are located at two ends of the rocker beam 1. In this way, the battery pack can be avoided, and the connected exhaust system can be sufficiently approached, so that the overall arrangement of the exhaust pipe 2 is very compact.

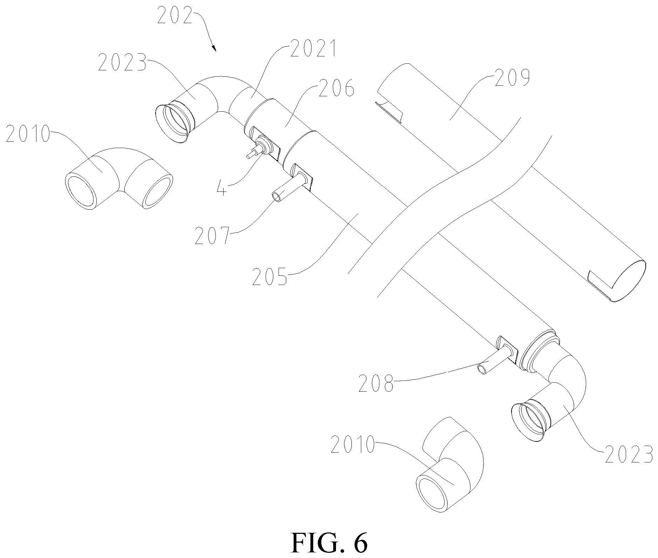

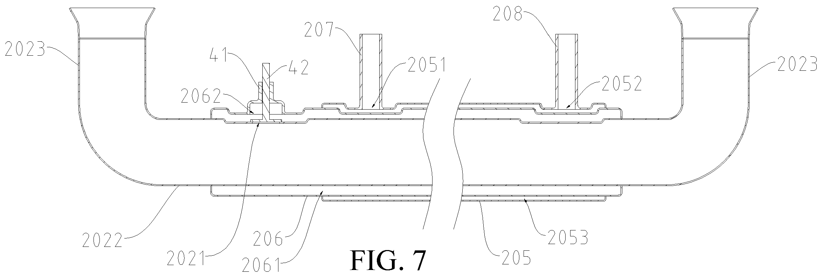

Since the exhaust gas generated by the engine still carries heat during a conveying process, the heat carried by the exhaust gas is partially conducted to the rocker beam 1. To ensure that a temperature of the rocker beam 1 is controlled within a normal range, in a specific implementation provided in the present disclosure, referring to FIG. 6 and FIG. 7, the exhaust pipe 2 may include a cooling jacket 205. The cooling jacket 205 sleeves the second pipe section 202 and is provided with a liquid inlet 2051 and a liquid outlet 2052. Two ends of the cooling jacket 205 are hermetically connected to the second pipe section 202. A cooling cavity 2053 is formed between the cooling jacket 205 and the second pipe section 202. The liquid inlet 2051 and the liquid outlet 2052 are arranged spaced away along a length direction of the cooling jacket 205 and are respectively communicated with the cooling cavity 2053. The rocker beam 1 is provided with two second avoidance holes 16. The two second avoidance holes 16 are arranged spaced away along a length direction of the rocker beam and respectively correspond to the liquid inlet 2051 and the liquid outlet 2052. By way of avoidance of the second avoidance holes 16, a cooling liquid conveying pipe in a cooling system of the whole vehicle can pass through the second avoidance holes 16 to be connected to the liquid inlet 2051, so as to guide the cooling liquid into the cooling cavity 2053. The cooling liquid after heat exchange can be discharged from the liquid outlet 2052 through the cooling liquid conveying pipe in the cooling system of the whole vehicle so as to cool the rocker beam 1 and dissipate the heat of the exhaust pipe 2, thereby relieving or preventing aging of a plastic part or a rubber part around the exhaust pipe 2, and avoiding an impact on the performance and service life of battery modules inside the battery pack caused by a high temperature.

Referring to FIG. 1 and FIG. 2, the lower vehicle body structure 100 may further include a cooling water pipe 3. The cooling water pipe 3 is arranged parallel to the rocker beam 1 and includes a liquid inlet pipe 31 and a liquid outlet pipe 32. A water inlet connector 207 and a water outlet connector 208 are respectively mounted on the liquid inlet 2051 and the liquid outlet 2052. The water inlet connector 207 and the water outlet connector 208 respectively pass through the second avoidance hole 16 and are respectively connected to the liquid inlet pipe 31 and the liquid outlet pipe 32. The liquid inlet pipe 31 is configured to convey the cooling liquid into the cooling cavity 2053 of the cooling jacket 205. The cooling liquid after heat exchange is discharged from the cooling cavity 2053 through the liquid outlet pipe 32. The liquid inlet pipe 31 and the liquid outlet pipe 32 are arranged parallel to the rocker beam 1 and are close to the rocker beam 1. In this way, the arrangement is more compact. In addition, the liquid inlet pipe 31 and the liquid outlet pipe 32 emerge from a side surface of the rocker beam 1, thereby facilitating the compact arrangement of cooling pipelines of the whole vehicle.

In an exemplary implementation provided in the present disclosure, referring to FIG. 6 and FIG. 7, the exhaust pipe 2 may include an intermediate jacket 206. The intermediate jacket 206 is arranged between the second pipe section 202 and the cooling jacket 205, and two ends of the intermediate jacket 206 are hermetically connected to the second pipe section 202. Two ends of the cooling jacket 205 are hermetically connected to the intermediate jacket 206. An intermediate cavity 2061 is formed between the intermediate jacket 206 and the second pipe section 202. The cooling cavity is formed between the intermediate jacket 206 and the cooling jacket 205. The intermediate jacket 206 is provided with a mounting hole 2062. A plunger valve 4 is mounted on the mounting hole 2062. The second pipe section 202 is provided with a through hole 2021. The plunger valve 4 opens or closes the through hole 2021, so as to communicate the second pipe section 202 with the intermediate cavity 2061 or separate the second pipe section 202 from the intermediate cavity 2061. When the plunger valve 4 opens the through hole 2021, the second pipe section 202 is communicated with the intermediate cavity 2061. The high-temperature exhaust gas conveyed in the second pipe section 202 may enter the intermediate cavity 2061, so as to perform heat exchange with the cooling liquid in the cooling cavity 2053. After the cooling liquid in the cooling cavity 2053 absorbs the heat of the exhaust gas, the energy of the exhaust gas may be recovered by a heat pump system of the whole vehicle, thereby increasing the warming-up speed and economy of the whole vehicle. When the plunger valve 4 closes the through hole 2021, the intermediate cavity 2061 may reduce the heat transfer of the high-temperature exhaust gas in the second pipe section 202 to the cooling cavity 2053, thereby achieving a function of thermal insulation. To facilitate a mounting of the plunger valve 4, the rocker beam 1 is provided with a third avoidance hole 17, and the plunger valve 4 passes through the third avoidance hole 17 and is exposed to the first accommodating space 13, so as to facilitate the connection between the valve core 42 and the plunger valve controller 5 (as described below).

In an exemplary implementation provided in the present disclosure, with reference to FIG. 2 and FIG. 7, the lower vehicle body structure 100 may include a plunger valve controller 5. The plunger valve 4 includes a valve body 41 and a valve core 42. The valve body 41 is fixed on the intermediate jacket 206. The valve core 42 is movably arranged in the valve body 41 and extends into the mounting hole 2062. The plunger valve controller 5 is connected to the valve core 42 and is fixed on the rocker beam 1. The plunger valve controller 5 may control the movement of the valve core 42, so as to open and close the through hole 2021.

Referring to FIG. 6 and FIG. 7, the second pipe section 202 includes a straight pipe section 2022 and bent sections 2023 connected to two ends of the straight pipe section 2022. To facilitate the connection between the intermediate jacket 206 and the straight pipe section 2022 and the connection between the cooling jacket 205 and the intermediate jacket 206, a length of the straight pipe section 2022, a length of the intermediate jacket 206 and a length of the cooling jacket 205 sequentially decrease progressively. In this way, the cooling jacket 205 is overlapped to the intermediate jacket 206, and the intermediate jacket 206 is overlapped to the straight pipe section 2022, so as to weld the cooling jacket 205 to the intermediate jacket 206 and weld the intermediate jacket 206 to the straight pipe section 2022. In addition, to sleeve the intermediate jacket 206 and the cooling jacket 205 on the second pipe section 202, after the intermediate jacket 206 and the cooling jacket 205 are sequentially mounted and fixed to the second pipe section 202, the second pipe section 202 may be bent to form a U shape. In this case, the straight pipe section 2022 and the bent sections 2023 are integrally formed. Alternatively, after the intermediate jacket 206 and the cooling jacket 205 are sequentially mounted and fixed to the straight pipe section 2022, the two bent sections 2023 may be welded to two ends of the straight pipe section 2022 to form a U-shaped second pipe section 202. This is not specifically limited in the present disclosure.

In an exemplary implementation provided in the present disclosure, referring to FIG. 6, the exhaust pipe 2 may include a first thermal insulation sleeve 209 and two second thermal insulation sleeves 2010. The first thermal insulation sleeve 209 is provided with an opening (not shown). The opening extends along a length direction of the first thermal insulation sleeve 209. The first thermal insulation sleeve 209 sleeves the straight pipe section 2022. A design of the opening is convenient to sleeve the first thermal insulation sleeve 209 on the straight pipe section 2022, so as to reduce the difficulty in assembly between the first thermal insulation sleeve 209 and the straight pipe section 2022. The two second thermal insulation sleeves 2010 respectively sleeve the bent sections 2023. The two second thermal insulation sleeves 2010 are configured to be L-shaped to adapt to the shapes of the bent sections 2023. The second pipe section 202 can be separated from the rocker beam 1 by way of the arrangement of the first thermal insulation sleeve 209 and the second thermal insulation sleeves 2010, so as to reduce the heat conduction of the second pipe section 202 to the rocker beam 1 and the vibration transmission to the whole vehicle.

In an exemplary implementation provided in the present disclosure, to limit the second pipe section 202 in the first accommodating space 13, referring to FIG. 2, fixed flanges 6 are respectively arranged at ends of the two bent sections 2023, and the fixed flange 6 sleeves the second thermal insulation sleeve 2010 and is fixedly connected to the rocker beam 1, so as to limit the second pipe section 202 in the first accommodating space 13. The fixed flange 6 may have a split structure, that is, the fixed flange 6 is divided into two flange parts. The two flange parts are respectively constructed as a semi-circular structure and clamp the second thermal insulation sleeve 2010 along a radial direction of the second pipe section 202, and the two flange parts are respectively fixed to the rocker beam 1 through bolts, screws and the like so as to facilitate the assembly.

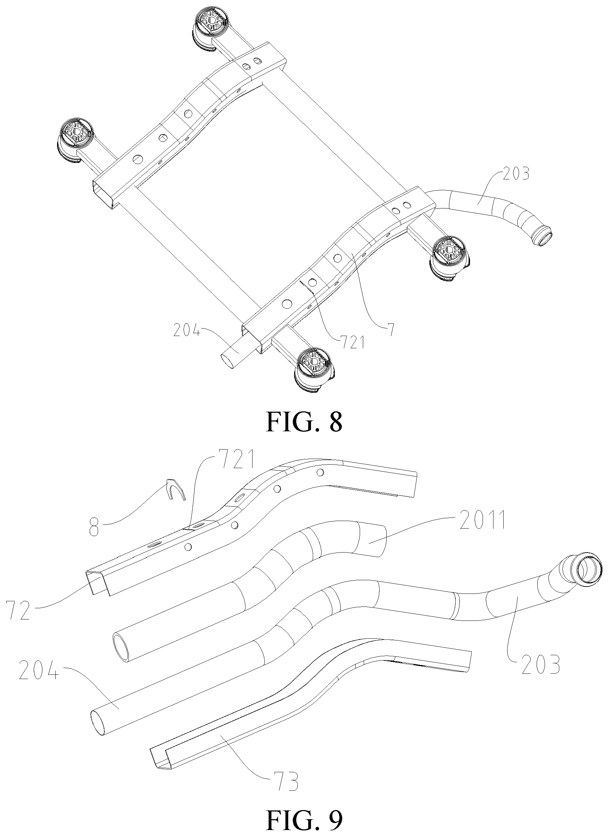

In an exemplary implementation provided in the present disclosure, referring to FIG. 1 and FIG. 8, the vehicle includes a sub-frame longitudinal beam 7. The exhaust pipe 2 includes a fourth pipe section 204. The sub-frame longitudinal beam 7 is formed with a second accommodating space 71. The fourth pipe section 204 is accommodated in the second accommodating space 71 and is connected to the third pipe section 203. In this way, the second accommodating space 71 formed by the sub-frame longitudinal beam 7 can be used for arrangement of the fourth pipe section 204 of the exhaust pipe 2, so as to achieve embedded integration of the fourth pipe section 204 and the sub-frame longitudinal beam 7. By this design, the fourth pipe section 204 does not need to occupy an additional space, and the space under a rear floor of the vehicle body can be completely occupied by a suspension, a power system and the like, so that the space under the rear floor of the vehicle body can be fully used, and a ground clearance of the whole vehicle can be increased.

By the above solution, in the present disclosure, the second pipe section 202 and the fourth pipe section 204 of the exhaust pipe 2 are respectively integrated in the rocker beam 1 and the sub-frame longitudinal beam 7, and are almost invisible. In this way, a hybrid and pure electric co-platform solution may be developed for the floor part and the rear floor part of the whole vehicle. The second pipe section 202 of the exhaust pipe 2 is a middle section part of the exhaust pipe 2, and the fourth pipe section 204 of the exhaust pipe 2 is a rear end part of the exhaust pipe 2.

In an exemplary implementation provided in the present disclosure, referring to FIG. 9, the sub-frame longitudinal beam 7 may include an upper plate 72 and a lower plate 73. The upper plate 72 and the lower plate 73 are respectively constructed to be 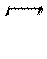 -shaped, and the upper plate 72 and the lower plate 73 are fastened to each other and connected to form the second accommodating space 71 for integration of the fourth pipe section 204 of the exhaust pipe 2. By a design manner of the sub-frame longitudinal beam 7, a problem of assembly between the sub-frame longitudinal beam 7 and the fourth pipe section 204 of the exhaust pipe 2 can be solved, so as to facilitate integration of the fourth pipe section 204 in the sub-frame longitudinal beam 7. The upper plate 72 and the lower plate 73 may be fixedly connected by way of welding, which is not specifically limited in the present disclosure.

In an exemplary implementation provided in the present disclosure, the fourth pipe section 204 may be sleeved with a third thermal insulation sleeve 2011. By the arrangement of the third thermal insulation sleeve 2011, the fourth pipe section 204 can be separated from the sub-frame longitudinal beam 7, so as to reduce the heat conduction of the fourth pipe section 204 to the sub-frame longitudinal beam 7 and the vibration transmission to the whole vehicle.

In an exemplary implementation provided in the present disclosure, the fourth pipe section 204 may be limited in the second accommodating space 71 through a limiting plate 8. The upper plate 72 is provided with a limiting hole 721 for the limiting plate 8 to pass through, so as to prevent interference between the limiting plate 8 and the upper plate 72. The limiting plate 8 is wrapped on the fourth pipe section 204 and is fixedly connected to the lower plate 73, thereby limiting the fourth pipe section 204 in the second accommodating space 71.

In the present disclosure, one end of the first pipe section 201 is connected to an engine, the second pipe section 202 is connected between the first pipe section 201 and the third pipe section 203, the third pipe section 203 is connected to the fourth pipe section 204, and a tail end of the fourth pipe section 204 is connected to an exhaust muffler, so as to discharge the exhaust gas generated during operation of the engine and processed by the exhaust muffler to the atmospheric environment. The first pipe section 201 and the second pipe section 202, the second pipe section 202 and the third pipe section 203, and the third pipe section 203 and the fourth pipe section 204 may be connected through pipeline structures. This is not specifically limited in the present disclosure. In addition, in the present disclosure, the first pipe section 201, the second pipe section 202, the third pipe section 203 and the fourth pipe section 204 may be an entire section of pipeline, or may be an entire section of pipeline formed by connecting multiple sections of sub-pipelines. This is not specifically limited in the present disclosure.

In the vehicle provided in the present disclosure, a part (namely the second pipe section 202) of the exhaust pipe 2 is integrated in the rocker beam 1, so that the space under the floor of the vehicle body can be completely occupied by the battery pack to maximize the space available for the battery pack. Moreover, the other part (namely the fourth pipe section 204) of the exhaust pipe 2 is integrated on the sub-frame longitudinal beam 7, and the space under the rear floor of the vehicle body can be completely occupied by the suspension, the power system and the like, so that the space under the rear floor of the vehicle body can be fully used, and the ground clearance of the whole vehicle can be increased. In addition, the second pipe section 202 of the exhaust pipe 2 is designed to have a three-layer structure, that is, the inside of the second pipe section 202 is used for circulation of the exhaust gas generated by the engine, the intermediate jacket 206 is used for thermal insulation or heat recovery, and the cooling jacket 205 is used for circulation of the cooling liquid. This design is favorable for heat recovery of the exhaust gas, and is favorable for increasing the warming-up speed and economy of the whole vehicle. In addition, the split design of the rocker beam 1 and the detachable connection between the first beam body 11 and the second beam body 12 can facilitate integration of the exhaust pipe 2 in the rocker beam 1, can solve the problem of assembly between the exhaust pipe 2 and the rocker beam 1, and can also facilitate the disassembly of the exhaust pipe 2.

On the basis of the above technical solution, the present disclosure further provides a vehicle. The vehicle includes the above lower vehicle body structure 100, and thus also has the above characteristics. To avoid repetitions, details are not described here.

The preferred implementations of the present disclosure are described in detail above with reference to the drawings. However, the present disclosure is not limited to the specific details in the above implementations. Multiple simple deformations may be made to the technical solution of the present disclosure within the scope of the technical concept of the present disclosure, and these simple deformations fall within the protection scope of the present disclosure.

In addition, it should be noted that the specific technical features described in the above specific implementations may be combined in any suitable manner without contradiction. To avoid unnecessary repetitions, various possible combination manners will not be separately explained in the present disclosure.

In addition, different implementations of the present disclosure may also be arbitrarily combined without departing from the idea of the present disclosure, and these combinations should also be regarded as the content disclosed in the present disclosure.

## Claims

1. A lower vehicle body structure (100), comprising:
a rocker beam (1), a first accommodating space (13) being formed in the rocker beam (1); and
an exhaust pipe (2), at least part of the exhaust pipe (2) being accommodated in the first accommodating space (13).

2. The lower vehicle body structure (100) according to claim 1, wherein the rocker beam (1) comprises a first beam body (11) and a second beam body (12), and the first beam body (11) and the second beam body (12) are oppositely arranged to form the first accommodating space (13).

3. The lower vehicle body structure (100) according to claim 2, wherein the first beam body (11) is detachably connected to the second beam body (12).

4. The lower vehicle body structure (100) according to claim 1 or 2, wherein a first arc-shaped groove (1121) is formed on the first beam body (11), a second arc-shaped groove (1221) is formed on the second beam body (12), and the first arc-shaped groove (1121) and the second arc-shaped groove (1221) are butted to form the first accommodating space (13).

5. The lower vehicle body structure (100) according to any one of claims 1 to 4, wherein the first beam body (11) comprises a first combination part (112), the second beam body (12) comprises a second combination part (122), and an extension part (1211) is arranged on at least one of the first combination part (112) and the second combination part (122), so that the first combination part (112) and the second combination part (122) have an overlapping region (18); and
a fastener passes through the overlapping region (18) to connect the first combination part (112) to the second combination part (122).

6. The lower vehicle body structure (100) according to any one of claims 1 to 5, wherein the rocker beam (1) further comprises a positioning structure (150), the positioning structure (150) comprises a positioning protrusion (151) and a positioning groove (152), one of the positioning protrusion (151) and the positioning groove (152) is arranged on the first beam body (11), and the other is arranged on the second beam body (12).

7. The lower vehicle body structure (100) according to any one of claims 2 to 6, wherein the exhaust pipe (2) comprises a first pipe section (201), a second pipe section (202) and a third pipe section (203), the second pipe section (202) is accommodated in the first accommodating space (13) and is configured as a U-shaped pipe section, the rocker beam (1) is provided with two first avoidance holes (14), the two first avoidance holes (14) are arranged spaced away along a length direction of the rocker beam (1), two ends of the second pipe section (202) extend out from the first avoidance holes (14), and two ends of the second pipe section (202) are respectively connected to the first pipe section (201) and the third pipe section (203).

8. The lower vehicle body structure (100) according to claim 7, wherein the first beam body (11) and the second beam body (12) are oppositely arranged and are detachably connected, the second beam body (12) is located on an inner side of the first beam body (11) in a transverse direction, a side of the second beam body (12) facing away from the first beam body (11) in the transverse direction is provided with the first avoidance holes (14), and the two first avoidance holes (14) are respectively arranged close to two ends of the second beam body (12).

9. The lower vehicle body structure (100) according to claim 7 or 8, wherein the exhaust pipe (2) comprises a cooling jacket (205), the cooling jacket (205) sleeves the second pipe section (202) and is provided with a liquid inlet (2051) and a liquid outlet (2052), two ends of the cooling jacket (205) are hermetically connected to the second pipe section (202), a cooling cavity (2053) is formed between the cooling jacket (205) and the second pipe section (202), the liquid inlet (2051) and the liquid outlet (2052) are arranged spaced away along a length direction of the cooling jacket (205), and the liquid inlet (2051) and the liquid outlet (2052) are respectively communicated with the cooling cavity (2053).

10. The lower vehicle body structure (100) according to claim 9, comprising a cooling water pipe (3), the cooling water pipe (3) being arranged parallel to the rocker beam (1) and the cooling water pipe (3) comprising a liquid inlet pipe (31) and a liquid outlet pipe (32), a water inlet connector (207) and a water outlet connector (208) being respectively mounted on the liquid inlet (2051) and the liquid outlet (2052), and the water inlet connector (207) and the water outlet connector (208) being respectively connected to the liquid inlet pipe (31) and the liquid outlet pipe (32).

11. The lower vehicle body structure (100) according to claim 9 or 10, wherein the exhaust pipe (2) comprises an intermediate jacket (206), the intermediate jacket (206) is arranged between the second pipe section (202) and the cooling jacket (205), two ends of the intermediate jacket (206) are hermetically connected to the second pipe section (202), two ends of the cooling jacket (205) are hermetically connected to the intermediate jacket (206), an intermediate cavity (2061) is formed between the intermediate jacket (206) and the second pipe section (202), and the cooling cavity (2053) is formed between the cooling jacket (205) and the intermediate jacket (206); and
the intermediate jacket (206) is provided with a mounting hole (2062), a plunger valve (4) is mounted on the mounting hole (2062), the second pipe section (202) is provided with a through hole (2021), and the plunger valve (4) opens or closes the through hole (2021), so as to communicate the second pipe section (202) with the intermediate cavity (2061) or separate the second pipe section (202) from the intermediate cavity (2061).

12. The lower vehicle body structure (100) according to claim 11, comprising a plunger valve controller (5), the plunger valve (4) comprising a valve body (41) and a valve core (42), the valve body (41) being fixed on the intermediate jacket (206), the valve core (42) being movably arranged in the valve body (41) and extending into the mounting hole (2062), and the plunger valve controller (5) being connected to the valve core (42) and being fixed on the rocker beam (1).

13. The lower vehicle body structure (100) according to claim 11 or 12, wherein the second pipe section (202) comprises a straight pipe section (2022) and bent sections (2023) connected to two ends of the straight pipe section (2022), and a length of the straight pipe section (2022), a length of the intermediate jacket (206) and a length of the cooling jacket (205) sequentially decrease progressively.

14. The lower vehicle body structure (100) according to claim 13, wherein the exhaust pipe (2) comprises a first thermal insulation sleeve (209) and a second thermal insulation sleeve (2010), the first thermal insulation sleeve (209) sleeves the straight pipe section (2022), and the second thermal insulation sleeve (2010) sleeves the bent section (2023).

15. The lower vehicle body structure (100) according to claim 14, wherein fixed flanges (6) are respectively arranged at ends of the two bent sections (2023), and the fixed flange (6) sleeves the second thermal insulation sleeve (2010) and is fixedly connected to the rocker beam (1).

16. The lower vehicle body structure (100) according to any one of claims 7 to 15, comprising a sub-frame longitudinal beam (7), the exhaust pipe (2) comprising a fourth pipe section (204), the sub-frame longitudinal beam (7) being formed with a second accommodating space (71), and the fourth pipe section (204) being accommodated in the second accommodating space (71) and being connected to the third pipe section (203).

17. The lower vehicle body structure (100) according to claim 16, wherein the fourth pipe section (204) is sleeved with a third thermal insulation sleeve (2011).

18. The lower vehicle body structure (100) according to claim 16 or 17, wherein the sub-frame longitudinal beam (7) comprises an upper plate (72) and a lower plate (73), and the upper plate (72) and the lower plate (73) are fastened to each other and connected to form the second accommodating space (71).

19. The lower vehicle body structure (100) according to claim 18, wherein the fourth pipe section (204) is limited in the second accommodating space (71) through a limiting plate (8), and the limiting plate (8) is wrapped on the fourth pipe section (204) and is fixedly connected to the lower plate (73).

20. A vehicle, comprising a lower vehicle body structure (100) according to any one of claims 1 to 19.
